# EUROPÄISCHE PATENTSCHRIFT

(11) **EP 1 716 380 B1**
(45) Veröffentlichungstag und Bekanntmachung des Hinweises auf die Patenterteilung: **19.08.2009**
(21) Anmeldenummer: 05707156.5
(22) Anmeldetag: 03.02.2005
(51) Int. Cl.: F28F 27/02, F01N 3/02, F02M 25/07

(54) **ABGASKÜHLERANORDNUNG FÜR EIN KRAFTFAHRZEUG**
ARRANGEMENT FOR COOLING THE EXHAUST GAS OF A MOTOR VEHICLE
SYSTEME DE REFROIDISSEMENT DE GAZ D'ECHAPPEMENT D'UN VEHICULE AUTOMOBILE

(30) Priorität: 09.02.2004 DE 102004006357
(43) Veröffentlichungstag der Anmeldung: 02.11.2006
(73) Patentinhaber: Behr GmbH & Co. KG, 70469 Stuttgart (DE)
(72) Erfinder: BECK, Claus, 73734 Esslingen (DE); GESKES, Peter, 73760 Ostfildern (DE); HENON, Damien, 08902 L'Hospitalet (ES)
(74) Vertreter: Grauel, Andreas
(86) Internationale Anmeldenummer: PCT/EP2005/001057
(87) Internationale Veröffentlichungsnummer: WO 2005/075928

(56) Entgegenhaltungen:
- EP-A- 1 030 050
- CA-A1- 2 273 698
- DE-A1- 10 228 619
- DE-U1- 29 714 478
- US-A- 2 076 287
- US-A- 4 498 524
- US-A- 4 993 367
- PATENT ABSTRACTS OF JAPAN Bd. 012, Nr. 315 (M-735), 26. August 1988 (1988-08-26) & JP 63 088212 A (AISIN SEIKI CO LTD), 19. April 1988 (1988-04-19)

## Beschreibung

Die Erfindung betrifft eine Abgaskühleranordnung für ein Kraftfahrzeug gemäß dem Oberbegriff des Anspruchs 1.

Aus der DE 199 62 863 A1 ist ein Abgaskühler zur Übertragung von Wärme zwischen dem Abgas einer Brennkraftmaschine eines Kraftfahrzeugs und einem Kühlmittel bekannt, die ein mehrteiliges Gehäuse, das einen Abgaseintrittsbereich, einen Wärmeübertragungsbereich, einen hierzu parallel verlaufenden und im Gehäuse angeordneten Bypasskanal, und einen Abgasaustrittsbereich umfasst, bekannt. Hierbei ist im am Wärmeübertragungsbereich angebrachten Abgasaustrittsbereich ein Stellelement zur Regelung des Abgasstroms durch den Wärmeübertragungsbereich und/oder den Bypasskanal vorgesehen.

Eine derartige Abgaskühleranordnung lässt noch Wünsche offen, unter anderem in Hinblick auf die Herstellungskosten.

Es ist Aufgabe der Erfindung, eine Abgaskühleranordnung der eingangs genannten Art zu verbessern.

Diese Aufgabe wird gelöst durch eine Abgaskühleranordnung mit den Merkmalen des Anspruchs 1.

Erfindungsgemäß ist eine Abgaskühleranordnung mit einem Gehäuse vorgesehen, in dem ein Wärmeübertragungsbereich mit Kühlrohren, ein Bypasskanal, ein Boden, eine Trennwand zwischen dem Wärmeübertragungsbereich und dem Bypasskanal, und eine Klappe zur Regelung des Abgasstroms durch den Wärmeübertragungsbereich und/oder einen Bypasskanal angeordnet ist. Die Klappe ist dabei um eine zu der Trennwand benachbarte und parallele Schwenkachse verschwenkbar. Hierbei kann zur Vereinfachung der Montage eine Längsteilung des Gehäuses vorgesehen sein, insbesondere eine mittige Längsteilung.

Die Klappe ist bevorzugt derart ausgebildet, dass zur Ermöglichung der Montage in einem seitlich geschlossenen, einteiligen Gehäuse bevorzugt die Welle und der Klappenteil getrennt ausgebildet und nach dem Einbau miteinander verbunden, insbesondere verschweißt oder verlötet, werden.

Die Klappe kann sowohl im Abgaseintrittsbereich als auch im Abgasaustrittsbereich angeordnet sein, wobei eine Anordnung im Abgaseintrittsbereich bevorzugt ist.

Der Wärmeübertragungsbereich, ein Abgaseintrittsbereich und/oder ein Abgasaustrittsbereich sind bevorzugt im Gehäuse aufgenommen. Dabei kann ein Diffusorbereich auch Teil des Gehäuses sein. Alternativ, insbesondere im Falle einer einteiligen Ausgestaltung des Gehäuses ohne Längsteilung, kann ein Diffusorbereich am Gehäuse angebracht, bevorzugt angeschweißt oder angelötet, sein.

Der Bypasskanal ist bevorzugt im Gehäuse parallel zum Wärmeübertragungsbereich verlaufend angeordnet. Alternativ kann der Bypasskanal auch im Abgaseintrittsbereich abzweigen und außerhalb des Gehäuses verlaufen.

Im Folgenden wird die Erfindung anhand dreier Ausführungsbeispiele unter Bezugnahme auf die Zeichnung im Einzelnen erläutert. Es zeigen:
- Fig. 1: eine ausschnittsweise und schematisch dargestellte Abgaskühleranordnung gemäß dem ersten Ausführungsbeispiel,
- Fig. 2: eine ausschnittsweise und schematisch dargestellte Abgaskühleranordnung gemäß dem zweiten Ausführungsbeispiel, und
- Fig. 3: einen Längsschnitt durch eine Abgaskühleranordnung gemäß dem dritten Ausführungsbeispiel.

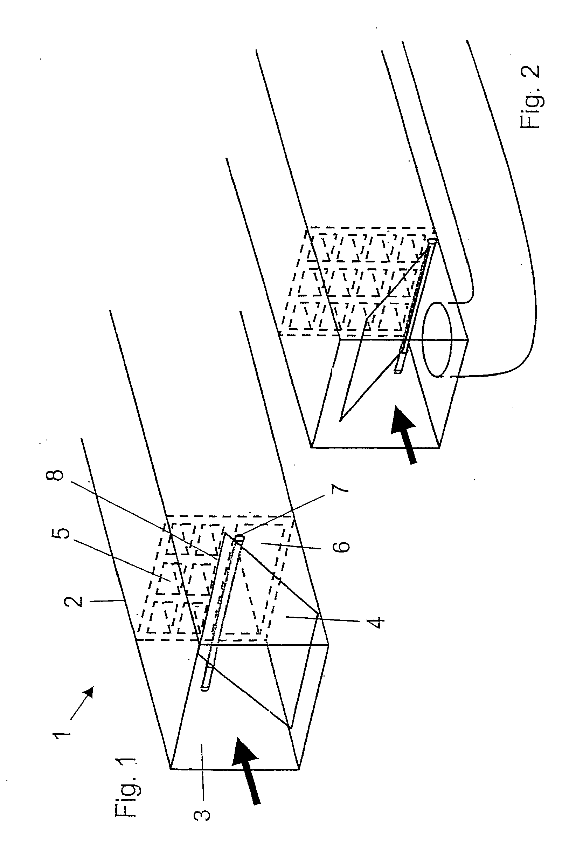

Fig. 1 zeigt eine Abgaskühleranordnung 1 mit einem Gehäuse 2, einem Abgaseintrittsbereich 3, in dem eine Klappe 4 als Stellorgan zur Regelung des durch einen Pfeil angedeuteten Abgasstroms angeordnet ist, einen hieran anschließenden Wärmeübertragungsbereich 5 und einen parallel dazu angeordneten Bypasskanal 6. Der nicht dargestellte Abgasaustrittsbereich ist entsprechend ausgebildet, jedoch ohne Stellorgan.

Die Klappe 4 ist um eine Schwenkachse 7 verschwenkbar, wobei die Schwenkachse 7 benachbart und parallel zu einer Trennwand 8 zwischen den parallel zueinander verlaufenden Wärmeübertragungsbereich 5 und dem Bypasskanal 6 angeordnet ist, so dass die Klappe 4 den Abgasstrom entsprechend ihrer Stellung leitet, nämlich in den Endstellungen jeweils entweder zum Wärmeübertragungsbereich 5 oder zum Bypasskanal 6 und in Zwischenstellungen entsprechend auf den Wärmeübertragungsbereich 5 und den Bypasskanal 6 aufteilt.

Das Gehäuse 2 ist einteilig über den gesamten Bereich ausgebildet, so dass es in sich die Klappenfunktion und die Wärmeübertragerfunktion, sowie vorliegend auch noch die Bypassfunktion, aufnimmt. Die Montage erfolgt von einem offenen Ende des Gehäuses 2 her, wobei eine Positionierung und Fixierung mittels im Gehäuse 2 vorgesehener Anschläge und/oder Öffnungen, die nach der Montage dicht verschlossen werden, erfolgt. Sonstige Elemente, wie beispielsweise ein Diffusor am Abgaseintritt, werden nach der Montage angebracht.

Gemäß einer Abwandlung des ersten Ausführungsbeispiels ist mittig im Gehäuse 2 eine Längsteilung desselben vorgesehen, so dass eine einfachere Herstellung des Gehäuses 2 und eine einfachere Montage der eingebauten Bauteile, wie insbesondere Klappe 4, Wärmeübertragungsbereich 5 und Bypasskanal 6, möglich ist. Nach dem Zusammenbau erfolgt ein Verschweißen oder Verlöten der beiden das Gehäuse 2 bildenden Gehäusehälften. Die beiden Gehäusehälften selbst weisen in Längsrichtung keine Unterteilung auf, d.h. sie sind jeweils in Längsrichtung von Abgaseintrittsbereich 3 bis Abgasaustrittsbereich einstückig ausgebildet. Hierbei kann in Folge der einfacheren Montage auch ein Diffusor einstückig mit dem Gehäuse 2 ausgebildet sein, so dass jede Gehäusehälfte eine Diffusorhälfte umfasst. Entsprechendes gilt auch für den Abgasaustrittsbereich.

Gemäß dem zweiten Ausführungsbeispiel nimmt der Wärmeübertragungsbereich 5 den gesamten Querschnitt des Gehäuses 2 ein und es ist ein außerhalb des Gehäuses 2 verlaufender Bypasskanal 6 vorgesehen, der vor der Klappe 4 vom Gehäuse 2 abzweigt. Die Schwenkachse 7 der Klappe 4 ist hierbei im Bereich einer Wandung des Gehäuses 2 angeordnet, wobei die Klappe 4 in ihrer einen Endstellung im Wesentlichen senkrecht zur Gehäuselängsachse und vor dem Wärmeübertragungsbereich 5 und in ihrer anderen Endstellung im Wesentlichen parallel zur Gehäuselängsachse und vor der Austrittsöffnung zum Bypasskanal 6 angeordnet ist. Der Bypasskanal 6 wird nach dem Wärmeübertragungsbereich 5 wieder in das Gehäuse 2 eingeführt, entsprechend der in Fig. 2 dargestellten Abzweigung.

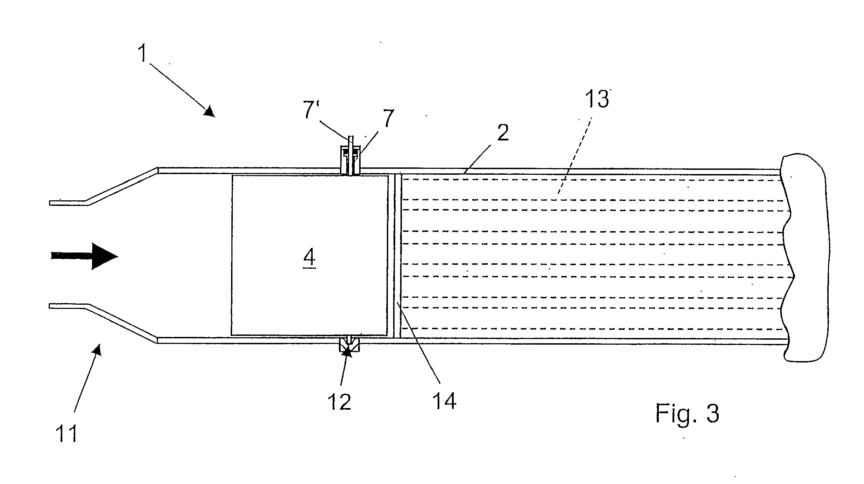

Entsprechend dem dritten, in Fig. 3 dargestellten Ausführungsbeispiel ist zusätzlich ein nachträglich am Gehäuse angebrachter Diffusor 11 zur Aufweitung des Abgasstroms vorgesehen. Nachfolgend ist eine Klappe 4 zur Regelung des Abgasstroms und Verteilung desselben auf einen Wärmeübertragungsbereich 5 und einen entsprechend dem ersten Ausführungsbeispiel parallel hierzu verlaufenden Bypasskanal (nicht dargestellt) angeordnet, wobei die Klappe 4 eine Welle 7' aufweist, die durch eine durch eine Wellendurchführung mit einer Abdichtung ragt und auf der anderen Gehäuseseite in einem Lager 12 gelagert ist, wobei das Lager 12 durch eine kleine Umformung des Gehäuses 2 nach außen gebildet ist. Der den Abgasstrom regelnde, vorliegend im Wesentlichen plattenförmig ausgebildete Teil der Klappe 4 wird nach der Montage an der Welle 7' angeschweißt. Um dem Wärmeübertragungsbereich 5 mit seinen einzelnen Kühlrohren 13 und den Bypasskanal im Gehäuse 2 zu positionieren, ist ein Boden 14 vorgesehen, welcher einen Anschlag hierfür bildet.

### Bezugszeichenliste

- 1: Abgaskühleranordnung
- 2: Gehäuse
- 3: Abgaseintrittsbereich
- 4: Klappe
- 5: Wärmeübertragungsbereich
- 6: Bypasskanal
- 7: Schwenkachse
- 7': Welle
- 8: Trennwand
- 11: Diffusor
- 12: Lager
- 13: Kühlrohr
- 14: Boden

## Patentansprüche

1. Abgaskühleranordnung, umfassend ein in Längsrichtung der Abgaskühleranordnung (1) einteilig ausgebildetes Gehäuse (2), einen in dem Gehäuse angeordneten Wärmeübertragungsbereich (5) mit einzelnen Kühlrohren (13), einen in dem Gehäuse angeordneten Bypasskanal (6), einen in dem Gehäuse angeordneten Boden (14), der einen Anschlag für die Kühlrohre und den Bypasskanal bildet, eine zwischen dem Wärmeübertragungsbereich (5) und dem Bypasskanal (6) angeordnete Trennwand (8), und eine in dem Gehäuse angeordnete Klappe (4) zur Regelung des Abgasstroms durch den Wärmeübertragungsbereich (5) und/oder den Bypasskanal (6), die um eine zu der Trennwand (8) benachbarte und parallele Schwenkachse (7) verschwenkbar ist.

2. Abgaskühleranordnung nach Anspruch 1, **dadurch gekennzeichnet, dass** die Klappe (4) mehrteilig ausgebildet ist, wobei eine Welle (7'), welche die Schwenkachse (7) der Klappe (4) bildet, vom dem den Abgasstrom regelnden Teil der Klappe (4) getrennt ausgebildet und dieser nach der Montage der Welle (7') an derselben angebracht ist.

3. Abgaskühleranordnung nach Anspruch 2, **dadurch gekennzeichnet, dass** der den Abgasstrom regelnde Teil der Klappe (4) mittels Schweißen oder Heißlöten oder Verpressen an der Welle (7') angebracht ist.

4. Abgaskühleranordnung nach einem der vorhergehenden Ansprüche, **dadurch gekennzeichnet, dass** die Klappe im Abgaseintrittsbereich (3) angeordnet ist.

5. Abgaskühleranordnung nach einem der vorhergehenden Ansprüche, **dadurch gekennzeichnet, dass** die Klappe im Abgasaustrittsbereich angeordnet ist.

6. Abgaskühleranordnung nach einem der vorhergehenden Ansprüche, **dadurch gekennzeichnet, dass** das Gehäuse (2) einteilig ausgebildet ist.

7. Abgaskühleranordnung nach Anspruch 6, **dadurch gekennzeichnet, dass** ein Abgaseintrittsbereich (3) und/oder ein Abgasaustrittsbereich (4) im Gehäuse (2) aufgenommen sind.

8. Abgaskühleranordnung nach einem der vorhergehenden Ansprüche, **dadurch gekennzeichnet, dass** das Gehäuse aus zwei Halbschalen zusammengesetzt ist.

9. Abgaskühleranordnung nach einem der vorhergehenden Ansprüche, **dadurch gekennzeichnet, dass** das Abgas im Kühler umgelenkt wird.

10. Abgaskühleranordnung nach einem der vorhergehenden Ansprüche, **dadurch gekennzeichnet, dass** das Gehäuse eine Öffnung aufweist, durch die die Klappe an die Schwenkachse befestigbar ist und die später wieder verschließbar ist.

11. Abgaskühleranordnung nach einem der vorhergehenden Ansprüche, **dadurch gekennzeichnet, dass** das Gehäuse eine Wellendurchführung mit einer Abdichtung und auf einer anderen Gehäuseseite ein durch eine Umformung des Gehäuses nach außen gebildetes Lager aufweist, und dass eine Welle (7'), welche die Schwenkachse (7) der Klappe (4) bildet, durch die Wellendurchführung ragt und in dem Lager gelagert ist.

12. Abgaskühleranordnung nach einem der vorhergehenden Ansprüche, **dadurch gekennzeichnet, dass** die Schwenkachse zu dem Boden (14) benachbart angeordnet ist.

## Claims

1. Exhaust gas cooling arrangement, comprising a housing (2) formed integrally in the longitudinal direction of the exhaust gas cooling arrangement (1), a heat-transfer area (5) arranged in the housing with individual cooling tubes (13), a bypass duct (6) arranged in the housing, a bottom (14) arranged in the housing, which forms an abutment for the cooling tubes and the bypass duct, a partition wall (8) arranged between the heat-transfer area (5) and the bypass duct (6), and a flap (4) arranged in the housing for regulating the exhaust gas flow through the heat-transfer area (5) and/or the bypass duct (6), which can pivot about a pivot axis (7) close and parallel to the said partition wall (8).

2. Exhaust gas cooling arrangement according to Claim 1, **characterised in that** the flap (4) is made of several parts, with a shaft (7') that forms the pivot axis (7) of the flap (4) made separately from the part of the flap (4) which controls the flow of exhaust gas, which latter is attached to the shaft (7') after the mounting thereof.

3. Exhaust gas cooling arrangement according to Claim 2, **characterised in that** the part of the flap (4) which controls the flow of exhaust gas is attached to the shaft (7') by welding or brazing or compression.

4. Exhaust gas cooling arrangement according to any of the preceding claims, **characterised in that** the flap is arranged in the exhaust-gas inlet area (3).

5. Exhaust gas cooling arrangement according to any of the preceding claims, **characterised in that** the flap is arranged in the exhaust-gas outlet area.

6. Exhaust gas cooling arrangement according to any of the preceding claims, **characterised in that** the housing (2) is integrally formed.

7. Exhaust gas cooling arrangement according to Claim 6, **characterised in that** an exhaust-gas inlet area (3) and/or an exhaust-gas outlet area (4) are accommodated in the housing (2).

8. Exhaust gas cooling arrangement according to any of the preceding claims, **characterised in that** the housing is composed of two half-shells.

9. Exhaust gas cooling arrangement according to any of the preceding claims, **characterised in that** the exhaust gas is diverted in the cooler.

10. Exhaust gas cooling arrangement according to any of the preceding claims, **characterised in that** the housing has an opening through which the flap can be fixed to the pivot axis and which can later be closed again.

11. Exhaust gas cooling arrangement according to any of the preceding claims, **characterised in that** the housing comprises a shaft aperture with a seal and, on the other side of the housing, a bearing formed by outward deformation of the housing, and a shaft (7') that forms the pivot axis of the flap (4) projects through the shaft aperture and is fitted into the bearing.

12. Exhaust gas cooling arrangement according to any of the preceding claims, **characterised in that** the pivot axis is positioned close to the bottom (14).

## Revendications

1. Agencement de refroidisseur de gaz d'échappement comprenant un carter (2) configuré d'un seul tenant dans le sens longitudinal de l'agencement de refroidisseur de gaz d'échappement (1), une zone de transfert de chaleur (5) comportant différents tubes de refroidissement (13) et disposée dans le carter, un conduit de dérivation (6) disposé dans le carter, un fond (14) disposé dans le carter, fond qui forme une butée pour les tubes de refroidissement et pour le conduit de dérivation, une paroi de séparation (8) disposée entre la zone de transfert de chaleur (5) et le conduit de dérivation (6), et un volet (4) disposé dans le carter et servant à la régulation du flux de gaz d'échappement à travers la zone de transfert de chaleur (5) et / ou le conduit de dérivation (6), volet qui peut pivoter autour d'un axe de pivotement (7) contigu et parallèle à la paroi de séparation (8).

2. Agencement de refroidisseur de gaz d'échappement selon la revendication 1, **caractérisé en ce que** le volet (4) est configuré en plusieurs parties, où un arbre (7'), qui forme l'axe de pivotement (7) du volet (4), est configuré en étant séparé de la partie du volet (4) régulant le flux de gaz d'échappement, et cette partie du volet, après le montage de l'arbre (7'), est fixée sur celui-ci.

3. Agencement de refroidisseur de gaz d'échappement selon la revendication 2, **caractérisé en ce que** la partie du volet (4) régulant le flux de gaz d'échappement est fixée sur l'arbre (7') par soudage ou par brasage à chaud ou bien par compression.

4. Agencement de refroidisseur de gaz d'échappement selon l'une quelconque des revendications précédentes, **caractérisé en ce que** le volet est disposé dans la zone d'entrée (3) des gaz d'échappement.

5. Agencement de refroidisseur de gaz d'échappement selon l'une quelconque des revendications précédentes, **caractérisé en ce que** le volet est disposé dans la zone de sortie des gaz d'échappement.

6. Agencement de refroidisseur de gaz d'échappement selon l'une quelconque des revendications précédentes, **caractérisé en ce que** le carter (2) est configuré d'un seul tenant.

7. Agencement de refroidisseur de gaz d'échappement selon la revendication 6, **caractérisé en ce qu'**une zone d'entrée (3) des gaz d'échappement et / ou une zone de sortie (4) des gaz d'échappement est ou sont logée(s) dans le carter (2).

8. Agencement de refroidisseur de gaz d'échappement selon l'une quelconque des revendications précédentes, **caractérisé en ce que** le carter est composé de deux demi-coques.

9. Agencement de refroidisseur de gaz d'échappement selon l'une quelconque des revendications précédentes, **caractérisé en ce que** les gaz d'échappement sont déviés dans le refroidisseur.

10. Agencement de refroidisseur de gaz d'échappement selon l'une quelconque des revendications précédentes, **caractérisé en ce que** le carter comporte une ouverture par laquelle le volet peut être fixé sur l'axe de pivotement et qui, ultérieurement, peut être à nouveau obturée.

11. Agencement de refroidisseur de gaz d'échappement selon l'une quelconque des revendications précédentes, **caractérisé en ce que** le carter comporte un passage d'arbre comprenant un joint d'étanchéité et, sur un autre côté du carter, un palier formé par une déformation du carter vers l'extérieur, et **en ce qu'**un arbre (7'), qui forme l'axe de pivotement (7) du volet (4), dépasse du passage d'arbre et est supporté dans le palier.

12. Agencement de refroidisseur de gaz d'échappement selon l'une quelconque des revendications précédentes, **caractérisé en ce que** l'axe de pivotement est disposé en étant contigu au fond (14).
